# EUROPÄISCHE PATENTSCHRIFT

(11) **EP 2 413 739 B1**
(45) Veröffentlichungstag und Bekanntmachung des Hinweises auf die Patenterteilung: **17.07.2013**
(21) Anmeldenummer: 10718444.2
(22) Anmeldetag: 31.03.2010
(51) Int. Cl.: A47B 31/02, A47J 36/24, F24C 15/18, H05B 6/12

(54) **TISCH ZUM WARMHALTEN VON SICH IN GESCHIRR BEFINDENDEN SPEISEN SOWIE TISCH MIT EINEM ODER MEHREREN INDUKTIONSMODULEN**
TABLE FOR KEEPING FOOD IN DISHES WARM AND TABLE WITH ONE OR MORE INDUCTION MODULES
TABLE POUR GARDER AU CHAUD LES REPAS DANS LES VAISSELLES ET TABLE AVEC UN OU PLUSIEUR MODULES D'INDUCTION

(30) Priorität: 03.04.2009 DE 102009003743
(43) Veröffentlichungstag der Anmeldung: 08.02.2012
(73) Patentinhaber: Gastros AG, 8005 Zürich (CH)
(72) Erfinder: Hafner, Timo, 78315 Radolfzell (DE)
(74) Vertreter: Späth, Dieter
(86) Internationale Anmeldenummer: PCT/DE2010/000370
(87) Internationale Veröffentlichungsnummer: WO 2010/112009

(56) Entgegenhaltungen:
- DE-C- 432 991
- DE-U- 1 940 235
- DE-U1- 20 312 793
- KR-A- 20050 028 290
- US-A- 3 740 513
- US-A- 3 987 268
- US-A- 4 114 009

## Beschreibung

### Technisches Gebiet

Die Erfindung bezieht sich auf einen Tisch zum Warmhalten von in Geschirr sich befindenden Speisen, mit einer Abstellfläche für das Geschirr und mit einer unter der Abstellfläche vorgesehenen Tragfläche für die Aufnahme von mindestens einer Wärmequelle. Ferner bezieht sich die Erfindung auf einen Tisch mit mindestens einem im Tisch angeordneten Induktionsmodul. Unter dem Begriff "Tisch" sollen dabei auch tischähnüche Möbel wie Buffets, Speisetheken und dgl, verstanden werden, wobei der Begriff "Warmhalten" auch ein Kochen und/oder Präsentieren von Speisen in dem Geschirr mit umfassen soll. Als Energieträger können beispielsweise Rechauds dienen, die Brennpaste beinhalten.

### Stand der Technik

Aus der Gastronomie sind bereits Einrichtungen bekannt, die mittels fossiler Energie über ein Warmwasserbad Speisen warm halten, sodass diese beispielsweise an einem Buffet präsentiert und dargeboten werden können. Aus dem Kochbereich sind übliche elektrische Kochplatten bekannt, die beispielsweise in Gehäusen oder in Herdplatten angeordnet sind und, aufgrund ihrer hohen Heizleistung, sowohl zum Wärmen als auch zum Kochen geeignet sind. Eine andere Alternative zum Warmhalten von Speisen bei Buffets, sind so genannte Infrarotstrahler. Diese dienen dazu, die Speisen sowohl von unten als auch von oben zu erwärmen.

Bei allen Vorrichtungen besteht der Nachteil, dass insbesondere bei den Handhabungen von den so genannten Rechaudes, die Speisen in Warmwasserbädern warm gehalten werden müssen, da die Rechaudes nicht unmittelbar mit dem Porzellan, auf dem die Speisen serviert werden, in Kontakt kommen sollten. Die Handhabung ist sehr aufwendig und nicht sehr zielgerichtet. Es besteht daher oft die Gefahr, dass die Speisen überhitzt werden. Möchte man dies vermeiden, besteht oft die Gefahr, dass die Speisen nur noch lauwarm sind.

Demgegenüber ist aus der DE 10135331 A1 eine Warmhalteeinrichtung bekannt, die fest in einer Platte, beispielsweise in einer Tischplatte, angeordnet ist. Sie besitzt eine Abstellfläche und mindestens eine unter der Abstellfläche auf einer Tragfläche angeordnete elektrisch beheizbare Wärmequelle, wobei die Abstellfläche und die Oberseite der Tischplatte im Wesentlichen in einer gemeinsamen Ebene liegen. Eine derartige Warmhalteeinrichtung ist fest z. B. in eine Esstischplatte eingebaut und kann ferner in einer Mehrfachanordnung in dieser entsprechend den jeweiligen Sitzpositionen von Personen angeordnet werden.

Das Patent US 3,740,513 A offenbart einen Tisch mit einer Tischplatte, an deren Unterseite in einem Kochbereich Spulen zum induktiven Kochen befestigt sind. Außerhalb des Kochbereichs ist die Tischplatte zum Zubereiten und Anrichten von Speisen und als Esstisch nutzbar.

### Nachteile des Standes der Technik

Ein wesentlicher Nachteil des Standes der Technik ist es, dass bei der Übertragung der Wärme von der Wärmequelle auf das entsprechende Geschirr, Verluste entstehen können. Zudem kann die entsprechende Umgebungstemperatur sehr stark aufgeheizt werden, sodass dies dann insbesondere beim Essen aber auch bei der Präsentation eines Buffets für den Benutzer als sehr unangenehm empfunden werden kann.

Ein weiterer Nachteil des Standes der Technik sind die fest angebrachten Induktionsspulen, die keine Variation ihrer Anzahl und ihres Ortes zulassen.

### Aufgabe der Erfindung

Aufgabe der Erfindung ist es, ein Möbel insbesondere zum Warmhalten von Speisen bereitzustellen, bei dem die aufgezeigten Nachteile nicht gegeben sind und bei dem auf sehr einfache Art und Weise ein Speisentisch installiert und die Speisen buffetartig präsentiert und gleichzeitig effektiv warmgehalten werden können. Eine weitere oder alternative Aufgabe der Erfindung ist eine Variabilität der Anzahl und Anordnung von Wärmequellen zur einfachen Anpassung an sich ändernde Speisepräsentationen.

### Lösung der Aufgabe

Die Lösung der Aufgabe besteht darin, dass bei einem Möbel als Tisch die Abstellfläche für das Geschirr mit den Speisen durch eine durchgehende Tischplatte und die Tragfläche für zumindest eine Wärmequelle durch einen Zwischenboden erhalten sind, wobei entweder die Tischplatte fest und der Zwischenboden gegenüber der Tischplatte in seinem Abstand zu dieser vorzugsweise höhenverstellbar, oder der Zwischenboden fest und die Tischplatte entfernbar, deckelartig aufklappbar oder translatorisch oder rotatorisch verschiebbar ausgebildet wird, womit ein leichter Zugriff zu der Tragfläche gegeben ist.

### Vorteile der Erfindung

Ein wesentlicher Vorteil der Erfindung besteht darin, dass mit der vorliegenden Erfindung ein Möbel in der Form eines Tisches bereitgestellt wird, der in seinem Aufbau als Warmhalteeinrichtung einfach installiert und benutzt werden kann.

Ferner kann es von großem Vorteil sein, wenn auf der Tragfläche des Zwischenbodens mehrere Wärmequellen vorgesehen werden, um das Angebot an Warmhaltestellen zu erhöhen, wobei es dabei zweckmäßig ist, als Wärmequelle jeweils modular gestaltete Wärmeplatten oder Induktionsmodule in das Möbel auf den Zwischenboden zu stellen, sodass diese für den Betrachter, oder denjenigen, der sich beispielsweise an einem Buffet bedient oder an einem Tisch isst, nicht sichtbar sind. Dadurch kann das Warmhalten von Speisen auch zielgerichteter erfolgen. Die Wärmequellen sind vorzugsweise einfach auf die Tragfläche gestellt.

Im Prinzip hat der erfindungsgemäße Tisch unterhalb der eigenen Tischfläche eine zweite Ebene. Diese zweite Ebene in der Form des Zwischenbodens kann sich dadurch auszeichnen, dass sie zum Beladen der einzelnen Induktionsmodule, etwas heruntergefahren werden kann, sodass der Abstand zwischen der ersten Ebene (der eigentlichen Tischfläche) und der zweiten Ebene (Ebene auf den die Induktionsmodule aufgesetzt werden) grösser ist, was das Handling der Induktionsmodule wesentlich vereinfacht. Ist diese zweite Ebene beladen, so kann diese zweite Ebene in der Form des Zwischenbodens in Richtung der ersten Ebene hochgefahren werden, wobei aber immer noch ein gewisser Abstand zwischen der Oberfläche eines jeweiligen Induktionsmoduls und der Unterseite der eigentlichen Tischfläche vorhanden sein sollte. Durch diesen Abstand, ist gewährleistet, dass ein gewisses Streufeld vorhanden ist, sodass dadurch die Speisen besser und effektiver warm gehalten werden können. Es hat sich auch gezeigt, dass gerade ein definierter Abstand von dem Induktionsmodul zu dem Geschirr eine optimale Ausnutzung und Einkopplung der Energie ergibt.

Die alternativ vorgesehene Ausführungsform, wonach die zweite Ebene in der Form als Zwischenboden unterhalb der ersten Ebene (der eigentlichen Tischebene) starr ausgebildet ist, gibt vor, dass dann die Tischplatte entfernt werden kann, um einfacher an die jeweiligen Wärmequellen heran zu kommen. Hierfür kann die Tischplatte aufklappbar, d. h. deckelartig ausgebildet sein, sodass von oben die einzelnen Induktionsmodule auf die zweite Ebene platziert werden können. Weitere Varianten könnten darin bestehen, dass die Tischplatte einfach abnehmbar oder translatorisch oder rotatorisch in irgendeiner Art und Weise verschiebbar ausgebildet ist.

Mit der aufgezeigten Konstruktion ist jedenfalls ein Tisch bereitgestellt, bei dem die einzelnen Induktionsmodule leicht auf den Zwischenboden aufgesetzt werden können, d. h., in der zweiten Ebene können die sonst schlecht zugänglichen Induktionsmodule besser beladen und entnommen werden.

Vorzugsweise besteht die Tischplatte aus satiniertem Glas. Dies bringt zum einen den Vorteil mit sich, dass diese leicht zu reinigen ist, aber auch den Vorteil, dass die Magnetfelder der Induktionselemente den Werkstoff Glas gut durchdringen können, um mit dem entsprechenden ausgestalteten Geschirr zusammenzuwirken, sodass die in dem Geschirr sich befindenden Lebensmittel sich gut erwärmen bzw. warm gehalten werden.

Ferner ist es zweckmäßig, wenn die Induktionsmodule derart gestaltet sind, dass die jeweilige Induktionsspule sehr deutlich auf der Oberfläche der Induktionsmodule angezeigt ist, d. h. optisch erkennbar ist, sodass diese Markierung auch noch durch das satinierte Glas sichtbar ist. Dies ermöglicht den Benutzern, die das Buffet bereiten bzw. den Teller auf dem Tisch platzieren, deren lagegerechte Bestimmung.

Die Induktionsmodule selbst sind vorzugsweise kastenförmig ausgestaltet und beinhalten neben der an sich notwendigen Elektronik auch die notwendige Induktionsspule. Jedes Induktionsmodul weist mindestens eine Induktionsspule auf, wobei auf der Oberfläche des jeweiligen Moduls, die Grösse der Induktionsspule und damit die "Kochplatte" aufgezeigt ist. Die Induktionsmodule selbst sind strombetrieben und können in unterschiedlichen Leistungsstufen betrieben werden. Vorzugsweise weisen sie elektrische Steckverbindungen beispielsweise mit Kabeln, Steckern und Steckdosen zu ihrer Stromversorgung auf. Es genügt dadurch für mehrere Induktionsmodule eine gebäudeseitige Steckdose zur Stromversorgung. Die Leistung der Induktionsmodule ist auch bei gemeinsamer Stromversorgung vorzugsweise für jedes Induktionsmodul einzeln einstellbar.

Der erfindungsgemäße Tisch weist vorzugsweise identische Induktionsmodule auf. Dadurch erübrigen sich in Größe, Form, Leistung etc. unterschiedliche Induktionsmodule. Da die Induktionsmodule auf die Tragfläche des Tischs unterhalb der Tischplatte gestellt werden bzw. gestellt sind, lässt sich ihre Anzahl und Anordnung variieren und individuell an den jeweiligen Anlass anpassen. Für großes und/oder langes Geschirr können zwei oder mehr Induktionsmodule auf die Tragfläche gestellt werden. Mit der Erfindung ist eine problemlose Anpassung der Induktionsmodule und deren Leistung an Größe, Form und Anordnung des auf der Tischplatte warmzuhaltenden Geschirrs möglich.

Um die unterschiedlichen Leistungsstufen darstellen zu können, können auf der Oberfläche der Induktionsmodule jeweils ein Anzeigeelement vorgesehen sein, über das der Betrachter die jeweils eingestellte Leistungsstufe, verifizieren kann. Um die Leistungsstufen verändern zu können, kann neben möglicherweise vorgesehenen manuell zu bedienenden Stellelementen für die Induktionsmodule auch eine Fernbedienung vorgesehen sein. Eine Fernbedienung bringt den Vorteil, dass die einzelnen Induktionsmodule separat bedienbar sind, da sie unterhalb der ersten Ebene, d. h. der Tischplatte angeordnet sind und so nur schwer zugängig sind. Die Fernbedienung kann vorzugsweise als Zeigeinstrument ausgelegt sein. Damit ist gemeint, dass die Fernbedienung, insbesondere ihr Gehäuse, so gestaltet ist, dass der Benutzer die Richtung, in der sie ein Signal sendet erkennt, vorzugsweise intuitiv erfasst. Das ist beispielsweise durch eine längliche Fernbedienung möglich. Dies bringt den Vorteil mit sich, dass der Benutzer auf ein bestimmtes Induktionsmodul zeigt und eine der vorgegebenen Leistungsstufen entweder durch Tastendruck oder durch Drehen eines entsprechenden Drehknopfes einstellt. Aufgrund der optischen Gestaltung des Anzeigeinstruments der Induktionsmodule erkennt der Benutzer die deren Leistungsstufen auch durch die gläserne Tischebene. Das Anzeigeinstrument kann beispielsweise Leuchtdioden zur Anzeige der Leistungsstufen aufweisen. Hierzu ist es nicht erforderlich, dass der Benutzer für jedes Induktionsmodul eine eigene Fernbedienung verwendet oder einen Wechsel eines Kanals vornehmen muss. Es ist somit möglich, individuell jedes einzelne Induktionsmodul mit ein und derselben Fernbedienung zu bedienen. Es reicht aus, mit einer derartigen Fernbedienung lediglich in Richtung des Induktionsmoduls zu zeigen, sodass das ausgesendete Signal ausschliesslich auf das ausgewählte Induktionsmodul trifft.

Vorzugsweise sendet die Fernbedienung ein Signal gerichtet aus, wobei das Signal durchaus streuen, beispielsweise also sich kegelförmig ausbreiten kann. Befindet sich die Fernbedienung ausreichend nahe am Induktionsmodul, lässt sich dieses zuverlässig "treffen". Damit ist gemeint, dass das Signal der Fernbedienung das Empfangsteil eines Induktionsmoduls erreicht und nicht auf die Empfangsteile benachbarter Induktionsmodule trifft. Durch das Anzeigelement erkennt der Benutzer, dass und welches Induktionsmodul er ein- bzw. verstellt. Die Fernbedienung kann eine kurze Reichweite von etwa 10 cm oder einigen 10 cm bis in den Meterbereich von etwa 1 m, 1,5 m oder 2 m aufweisen. Dadurch ist die Richtwirkung der Fernbedienung ausreichend um exakt ein gewünschtes Induktionsmodul einzustellen. Die Fernbedienung sendet vorzugsweise ein Infrarotsignal, nicht notwendig als Laserstrahl, es genügt ein optisch mit Linsen und oder Spiegeln fokussierter oder auch kegelförmig auffächernder Lichtstrahl. Verwendbar ist auch sichtbares Licht, das den Vorteil hat, dass sichtbar ist, welches Induktionsmodul "getroffen" wird. Ein Lichtstrahl kann auch ausschliesslich zum Zielen auf das gewünschte Induktionsmodul verwendet und das Signal in anderer Weise von der Fernbedienung zum Induktionsmodul übertragen werden. Auch andere, beispielsweise akustische-, auch Ultraschall- oder elektromagnetische Signale sind zur Einstellung der Leistungsstufen der Induktionsmodule mit der Fernbedienung möglich.

Neben dem aufgezeigten Einstellen einer entsprechenden Leistungsstufe, ist es auch möglich, die jeweiligen Induktionsmodule von der Außenseite (von der jeweiligen Seite) des Tisches ein- und auszuschalten.

Vorteilhaft sind die Induktionsmodule in ihren Größen so bemessen, dass sie die aus dem Gastronomiebereich bekannten Geschirreinrichtungen entsprechend aufnehmen können. Insbesondere lange Schalen und Aufbewahrungsmittel bzw. Platten können dabei derart warm gehalten werden, dass diese mindestens zwei Induktionsmodule übergreifen. Es können alle Induktionsmodule gleich groß gestaltet sein.

Somit ist ein Möbel in der Form eines Tisches geschaffen worden, das auf sehr einfache Art und Weise zur Präsentation und zum Warmhalten von Speisen, aber auch zum Kochen von Speisen geeignet ist, ohne dass der Betrachter, zum einen durch eine hohe Umgebungstemperatur belästigt wird und ohne dass auch der Betrachter die entsprechenden Kochmodule, hier Induktionsmodule, unmittelbar einsehen kann, wie er es beispielsweise von so genannten Rechaudes gewöhnt ist.

Die Installation der Induktionsmodule ist sehr einfach, da sie in eine unter der eigentlichen Tischplatte angeordneten zweiten Ebene, dem Zwischenboden, einführbar und in einem bestimmten Abstand zur Tischoberfläche angeordnet sind. Damit ist es nicht notwendig, entsprechende Einlassungen in Tischen vorzusehen, in denen die Induktionsmodule zwangsplatziert werden müssen. Es besteht im Gegenteil die Möglichkeit, die Induktionsmodule frei auf der zweiten Ebene anzuordnen. Das Beladen der zweiten Ebene mit den Induktionsmodulen ist sehr einfach, da unterschiedliche Vorrichtungen vorgesehen sind, die ein einfaches Plazieren auf diese Ebenen ermöglichen. Das Bedienen der Induktionsmodule kann ebenfalls sehr einfach und intuitiv sein, da durch eine mögliche Fernbedienung lediglich nur zeigerartig auf das einzustellende Induktionsmodul gezeigt werden muss, damit die entsprechende Leistungsstufe eingestellt werden kann.

Der Abstand zwischen Induktionsmodul und Geschirr wird auf diese Weise immer im für den Betrieb optimalen Berech gehalten.

Weitere Vorteile der Erfindung sind aus der nachstehenden Beschreibung, den Zeichnungen sowie den Ansprüchen zu entnehmen.

### Zeichnungen

Es zeigen:
- Fig. 1: eine perspektivische Ansicht eines erfindungsgemässen Tisches;
- Fig. 2: eine perspektivische Ansicht des Tisches gemäss Fig. 1 in einem kleineren Maßstab, jedoch in der Situation, in der gerade Induktionsmodule in den Tisch eingeführt werden;
- Fig. 3: eine Ansicht des Tisches gemäss Figur 2 mit einer Mehrzahl von Induktionsmodulen und
- Fig. 4: eine perspektivische Ansicht des Tisches gemäss Fig. 3, in Gebrauchsstellung als Buffet.

### Beschreibung eines Ausführungsbeispiels

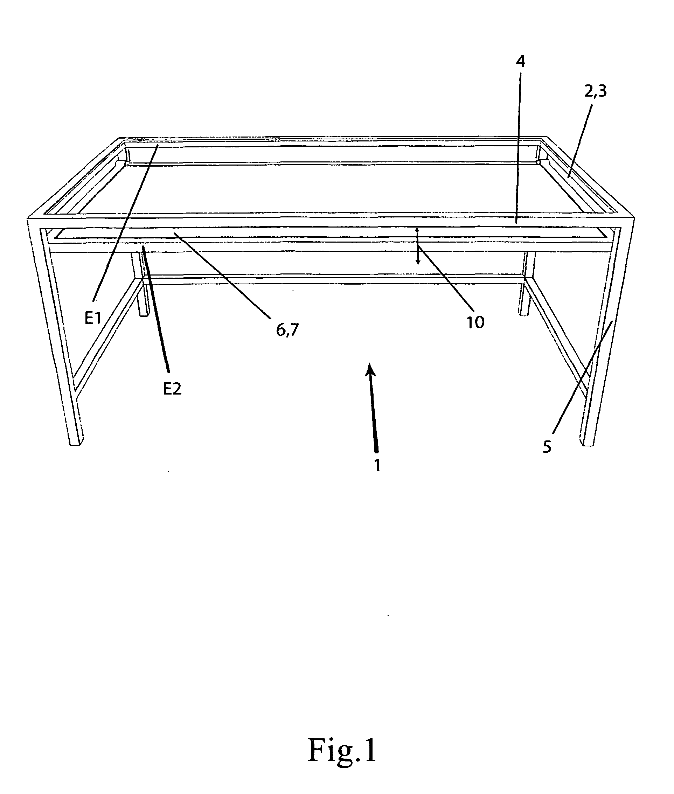

Der in Fig. 1 perspektivisch dargestellte Tisch -bezeichnet mit 1- besitzt eine Abstellfläche 2 einer Tischplatte 3 aus santiniertem Glas, die in einen Tischrahmen 4 gelegt ist. Der Tischrahmen 4 wird durch vier Tischbeine 5 getragen, zwischen denen unterhalb der Tischplatte 3 eine Tragfläche 6 durch einen Zwischenboden 7 vorgesehen ist.

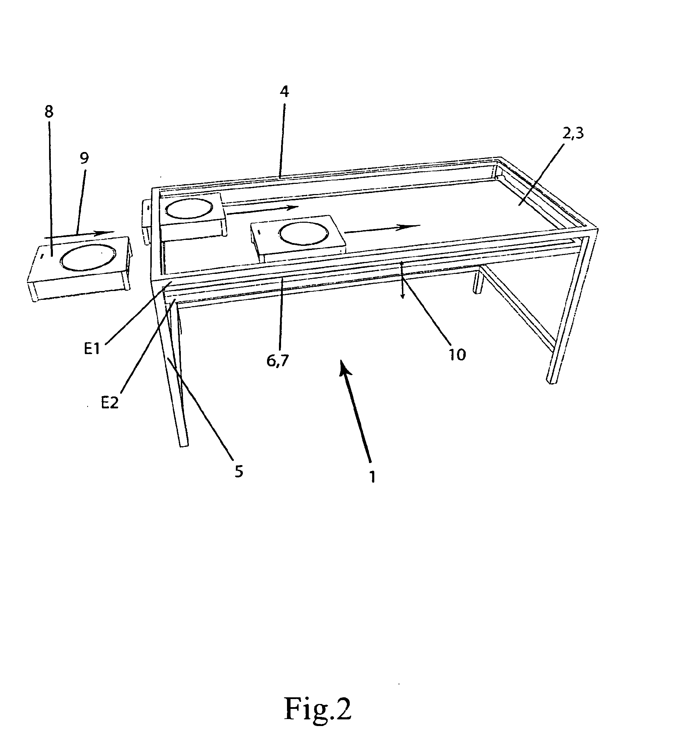

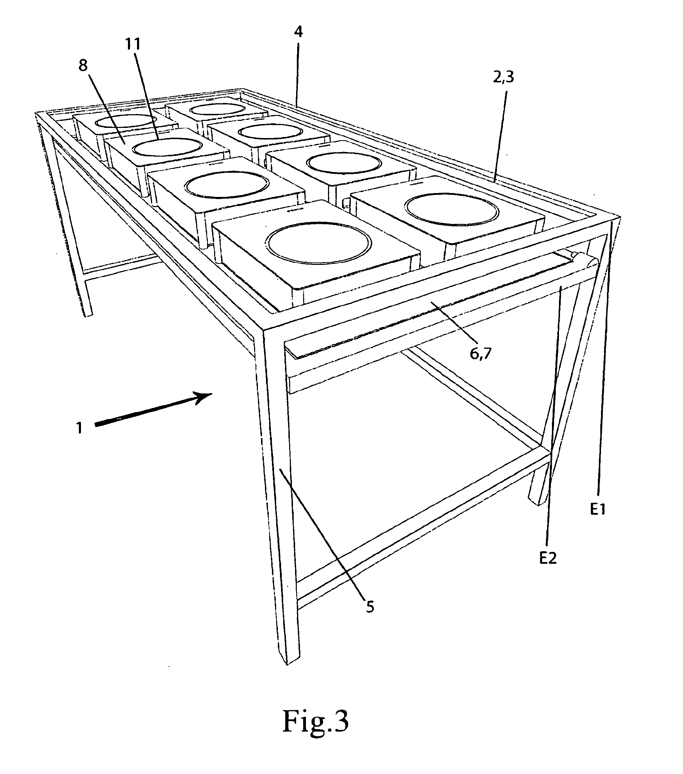

Wie in Fig. 2 dargestellt, werden hier gerade Induktionsmodule 8 als Wärmequellen zwischen der Tischplatte 3 als erste Ebene E1 des Tisches 1 und dem Zwischenboden 7 als zweite Ebene E2 entsprechend den Pfeilen 9 eingeschoben. Die zweite Ebene E2 ist gegenüber der ersten Ebene E1 höhenverstellbar ausgebildet, was durch einen Pfeil 10 in Fig. 1 und 2 angedeutet ist, d. h. die lichte Weite zwischen der ersten Ebene E1 und der zweiten Ebene E2 kann vergrössert werden. Dadurch ist es möglich, auf einfache Weise die Induktionsmodule 8 auf der Tragfläche 6 der Ebene E2 abzusetzen. Nach dem Einsetzen aller Induktionsmodule 8 gemäß Fig. 3 wird der Zwischenboden 7 der Ebene E2 wie mit dem Pfeil 10 dargestellt nach oben verschoben, bis ein geringer Abstand zwischen der Unterseite der Tischplatte 3 der Ebene E1 und der Oberfläche der Induktionsmodule 8 gebildet ist. Um eine optimale Warm haltung zu erreichen, sollte dieser Abstand eingehalten werden.

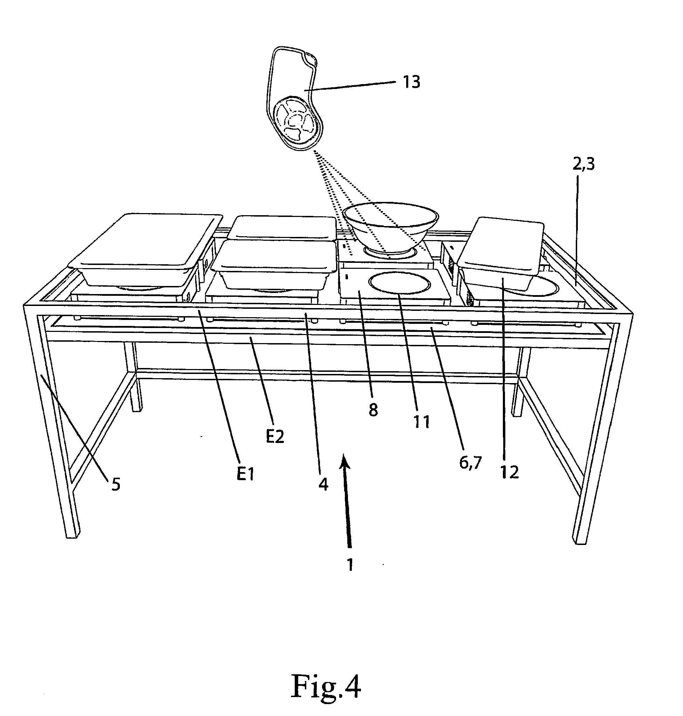

Die jeweiligen Oberflächen der Induktionsmodule 8 sind mit einem Kreis 11 gekennzeichnet, der dem Durchmesser der in dem Induktionsmodul 8 angeordneten Spule entspricht. Die Kreise 11 sind durch die aus Glas bestehenden Tischplatte 3, das hier vorzugsweise milchig ausgestaltet ist, sichtbar, sodass Geschirr 12 in der Form von Schüsseln und Töpfen gemäß Fig. 4 einfach platziert werden können.

Alle Induktionsmodule 8 des Tischs 1 sind identisch. Zu ihrer Stromversorgung sind mehrere Induktionsmodule 8 über nicht dargestellte Kabelsteckverbindungen miteinander verbunden. Es genügen beispielsweise zwei gebäudeseitige Steckdosen zur Stromversorgung der Induktionsmodule 8 des Tischs 1. Trotz gemeinsamer Stromversorgung sind die Leistungsstufen der Induktionsmodule 8 unabhängig voneinander einstellbar. Die Induktionsmodule 8 zeigen die eingestellten Leistungsstufen optisch beispielsweise über Leuchtdioden an.

Zur Einstellung der Leistungsstufen der Induktionsmodule 8 weist der Tisch 1 eine Fernbedienung 13 auf, die in Fig. 4 überproportional groß dargestellt ist. Die Fernbedienung 13 sendet ein kegelförmig gerichtetes optisches Signal im Infrarotbereich aus, wie in Fig. 4 mit Strichlinien angedeutet. Ein Gehäuse der Fernbedienung 13 ist so gestaltet, dass ein Benutzer die Signalrichtung intuitiv erfasst und die Fernbedienung 13 so ausrichten kann, dass ihr Signal auf ein Induktionsmodul 8 trifft, dessen Leistungsstufe ein- oder verstellt werden soll, ohne dass das Signal auf ein anderes, neben dem einen Induktionsmodul 8 stehendes Induktionsmodul 8 trifft. Eine Einstellung der Leistungsstufen aller Induktionsmodule 8 ist mit einer einzigen Fernbedienung 13 möglich, ohne dass die Fernbedienung 13 verschiedene Kanäle oder eine andere Individualisierung der Induktionsmodule 8 aufweisen muss. An den Anzeigelementen der Induktionsmodule 8 erkennt der Benutzer, welches Induktionsmodul 8 er ein- oder verstellt, dass er das gewünschte Induktionsmodul 8 und nicht etwa ein daneben stehendes Induktionsmodul 8 ein- oder verstellt.

**Bezugszeichenliste**

| | |
|---|---|
| 1 | Tisch |
| 2 | Abstellfläche |
| 3 | Tischplatte |
| 4 | Tischrahmen |
| 5 | Tischbein |
| 6 | Tragfläche |
| 7 | Zwischenboden |
| 8 | Induktionsmodul |
| 9 | Pfeil (Einbau) |
| 10 | Pfeil (höhenverstellbar) |
| 11 | Kreis |
| 12 | Geschirr |
| 13 | Fernbedienung |

## Patentansprüche

1. Tisch (1) zum Warmhalten von in Geschirr (12) sich befindenden Speisen, mit einer Abstellfläche (2) für das Geschirr (12) und mit einer unter der Abstellfläche (2) vorgesehenen Tragfläche (6) für die Aufnahme von mindestens einer Wärmequelle (8), wobei die Abstellfläche (2) durch eine durchgehende Tischplatte (3) und die Tragfläche (6) durch einen Zwischenboden (7) erhalten sind, **dadurch gekennzeichnet, dass** der Zwischenboden (7) fest und die Tischplatte (3) entfernbar, nämlich deckelartig aufklappbar oder translatorisch oder rotatorisch verschiebbar ausgebildet ist.

2. Tisch (1) zum Warmhalten von in Geschirr (12) sich befindenden Speisen, mit einer Abstellfläche (2) für das Geschirr (12) und mit einer unter der Abstellfläche (2) vorgesehenen Tragfläche (6) für die Aufnahme von mindestens einer Wärmequelle (8), wobei die Abstellfläche (2) durch eine durchgehende Tischplatte (3) und die Tragfläche (6) durch einen Zwischenboden (7) erhalten sind, **dadurch gekennzeichnet, dass** die Tischplatte (3) fest und der Zwischenboden (7) gegenüber der Tischplatte (3) in seinem Abstand zu dieser höhenverstellbar ausgebildet sind.

3. Tisch nach Anspruch 1 oder 2, **dadurch gekennzeichnet, dass** die als Abstellfläche (2) für die Geschirre (12) dienende Tischplatte (3) aus einem satinierten Glas besteht.

4. Tisch nach einem der vorherigen Ansprüche, **dadurch gekennzeichnet, dass** auf der Tragfläche (6) des Zwischenbodens (7) mindestens eine Wärmequelle in der Form einer modular gestalteten Wärmeplatte vorgesehen ist.

5. Tisch nach einem der vorherigen Ansprüche, **dadurch gekennzeichnet, dass** auf der Tragfläche (6) mindestens ein Induktionsmodul (8) vorgesehen ist, das zur Erwärmung eines Geschirrs (12) ein Magnetfeld erzeugt.

6. Tisch nach Anspruch 5, **dadurch gekennzeichnet, dass** die Induktionsmodule (8) derart gestaltet sind, dass deren jeweilige Bereiche der Anordnung der Induktionsspule optisch erkennbar sind.

7. Tisch nach Anspruch 5 oder 6, **dadurch gekennzeichnet, dass** der Tisch (1) mehrere Induktionsmodule (8) aufweist, und dass alle Induktionsmodule (8) identisch sind.

8. Tisch nach einem der Ansprüche 5 bis 7, **dadurch gekennzeichnet, dass** die Induktionsmodule (8) elektrische Steckverbindungen aufweisen.

9. Tisch nach einem der Ansprüche 5 bis 8, **dadurch gekennzeichnet, dass** die Induktionsmodule (8) ein Anzeigeelement aufweisen, das die jeweilige Leistungsstufe angibt.

10. Tisch nach einem der Ansprüche 5 bis 9, **dadurch gekennzeichnet, dass** der Tisch (1) eine Fernbedienung (13) für die Induktionsmodule (8) aufweist.

11. Tisch nach Anspruch 10, **dadurch gekennzeichnet, dass** die Fernbedienung (13) eine kurze Reichweite von etwa 10 cm oder einigen 10 cm bis etwa 1 m, 1,5m oder 2m aufweist.

12. Tisch nach einem der Ansprüche 5 bis 11, **dadurch gekennzeichnet, dass** die jeweilige Leistungsstufe manuell durch an den Induktionsmodulen (8) vorgesehenen Stellelementen oder durch eine Fernbedienung (13) veränderbar ist.

13. Tisch nach Anspruch 10, **dadurch gekennzeichnet, dass** die Fernbedienung (13) als ein Zeigelement ausgelegt ist.

14. Tisch nach Anspruch 5, **dadurch gekennzeichnet, dass** die Leistungsstufen der Induktionsmodule (8) an der Außenseite des Tisches (1) einstellbar sind.

15. Tisch nach Anspruch 5, **dadurch gekennzeichnet, dass** bei einem höhenverstellbaren Zwischenboden (7) der Abstand der Induktionsmodule (8) zur Tischplatte (3) derart einstellbar ist, dass ein gewisses Streufeld der Magnetspulen der Induktionsmodule (8) gegeben ist.

## Claims

1. Table (1) for keeping food warm in dishes (12), with a storage surface (2) for the dishes (12) and with a carrying surface (2) being provided beneath the storage surface (2) that is intended for receiving at least one heat source (8), wherein the storage surface (2) is obtained by a continuous table top (3) and the carrying surface (6) is obtained by an intermediate shelf (7), **characterized in that** the intermediate shelf (7) is fixed and the table top (3) is removable, namely configured so as to be swung open like a hinged lid or as to be translationally or rotationally shifted.

2. Table (1) for keeping food warm in dishes (12), with a storage surface (2) for the dishes (12) and with a carrying surface (2) being provided beneath the storage surface (2) that is intended for receiving at least one heat source (8), wherein the storage surface (2) is obtained by a continuous table top (3) and the carrying surface (6) is obtained by an intermediate shelf (7), **characterized in that** the intermediate shelf (7) is fixed and the table top (3) is configured as being height-adjustable in the distance with respect to the table top (3).

3. Table as specified in claim 1 or claim 2, **characterized in that** the table top (3) serving as the storage surface (2) for the dishes (12) is composed of a calendered glass.

4. Table as specified in any one of the preceding claims, **characterized in that** the support surface (6) of the intermediate shelf (7) is provided with at least one heat source in the form of a modularly designed hot plate.

5. Table as specified in any one of the preceding claims, **characterized in that** at least one induction module (8) is provided on the support surface (6), which induction module generates a magnetic field for heating one of the dishes (12).

6. Table as specified in claim 5, **characterized in that** the induction modules (8) are configured in such a manner that from their respective areas, the arrangement of the induction coils is optically recognizable.

7. Table as specified in claim 5 or claim 6, **characterized in that** the table (1) has a plurality of induction modules (8) and that all induction modules (8) are identical.

8. Table as specified in any one of the claims 5 to 7, **characterized in that** the induction modules (8) have an electric plug and socket connection.

9. Table as specified in any one of the claims 5 to 8, **characterized in that** the induction modules (8) have a display element that indicates the respective power level.

10. Table as specified in any one of the claims 5 to 9, **characterized in that** the table (1) has a remote control apparatus (13) for the induction modules (8).

11. Table as specified in claim 10, **characterized in that** the remote control (13) exhibits a short range of approximately 10 cm or several centimeters beyond 10 cm up to about 1 m, 1.5 m or 2 m.

12. Table as specified in any one of the claims 5 to 11, **characterized in that** the respective power level can be changed manually by adjusting elements provided on the induction modules (8) or by a remote control apparatus (13).

13. Table as specified in claim 10, **characterized in that** the remote control (13) is configured as a display element.

14. Table as specified in claim 5, **characterized in that** the power levels of the induction modules (8) are adjustable on the outside of the table (1).

15. Table as specified in claim 5, **characterized in that** with a height-adjustable intermediate shelf (7), the distance from the induction modules (8) to the table top (3) is adjustable in such a manner that a certain stray field of the magnetic coils of the induction modules (8) is present.

## Revendications

1. Table (1) pour maintenir au chaud des mets culinaires contenus dans des récipients (12), comprenant une surface de rangement (2) pour les récipients (12) et une surface de support (6) prévue sous la surface de rangement (2) pour recevoir au moins une source de chaleur (8), la surface de rangement (2) étant constituée par un plateau continu (3) et la surface de support (6) par un fond intermédiaire (7), **caractérisée en ce que** le fond intermédiaire (7) est fixe et le plateau (3) amovible, à savoir relevable à la manière d'un couvercle ou déplaçable par translation ou rotation.

2. Table (1) pour maintenir au chaud des mets culinaires contenus dans des récipients (12), comprenant une surface de rangement (2) pour les récipients (12) et une surface de support (6) prévue sous la surface de rangement (2) pour recevoir au moins une source de chaleur (8), la surface de rangement (2) étant constituée par un plateau continu (3) et la surface de support (6) par un fond intermédiaire (7), **caractérisée en ce que** le plateau (3) est fixe et le fond intermédiaire (7) réglable en hauteur par rapport au plateau (3) dans sa distance par rapport à celui-ci.

3. Table selon la revendication 1 ou 2, **caractérisée en ce que** le plateau (3) servant de surface de rangement (2) pour les récipients (12) est constitué d'un verre satiné.

4. Table selon une des revendications précédentes, **caractérisée en ce qu'**au moins une source de chaleur sous la forme d'une plaque chauffante modulaire est prévue sur la surface de support (6) du fond intermédiaire (7).

5. Table selon une des revendications précédentes, **caractérisée en ce qu'**au moins un module d'induction (8), qui crée un champ magnétique pour chauffer un récipient (12), est prévu sur la surface de support (6).

6. Table selon la revendication 5, **caractérisée en ce que** les modules d'induction (8) sont conçus de façon que leurs zones respectives soient reconnaissables optiquement à la disposition de la bobine d'induction.

7. Table selon la revendication 5 ou 6, **caractérisée en ce que** la table (1) présente plusieurs modules d'induction (8) et que tous les modules d'induction (8) sont identiques.

8. Table selon une des revendications 5 à 7, **caractérisée en ce que** les modules d'induction (8) présentent des connecteurs électriques.

9. Table selon une des revendications 5 à 8, **caractérisée en ce que** les modules d'induction (8) présentent un élément d'affichage qui indique le niveau de puissance respectif.

10. Table selon une des revendications 5 à 9, **caractérisée en ce que** la table (1) présente une télécommande (13) pour les modules d'induction (8).

11. Table selon la revendication 10, **caractérisée en ce que** la télécommande (13) a une courte portée d'environ 10 cm ou de quelques dizaines de cm à environ 1 m, 1,5 m ou 2 m.

12. Table selon une des revendications 5 à 11, **caractérisée en ce que** le niveau de puissance respectif est modifiable manuellement au moyen d'éléments de réglage prévus sur les modules d'induction (8) ou au moyen d'une télécommande (13).

13. Table selon la revendication 10, **caractérisée en ce que** la télécommande (13) est conçue comme un élément de pointage.

14. Table selon la revendication 5, **caractérisée en ce que** les niveaux de puissance des modules d'induction (8) sont réglables sur le côté extérieur de la table (1).

15. Table selon la revendication 5, **caractérisée en ce que** dans le cas d'un fond intermédiaire (7) réglable en hauteur, la distance entre les modules d'induction (8) et le plateau (3) est réglable de façon à obtenir un certain champ de dispersion des bobines électromagnétiques des modules d'induction (8).
